# EUROPEAN PATENT APPLICATION

(11) **EP 4 431 559 A1**
(43) Date of publication of application: **18.09.2024**
(21) Application number: 22893232.3
(22) Date of filing: 10.11.2022
(51) Int. Cl.: C08K 5/00, C08K 5/11, C08K 3/013, C08L 27/06

(54) **PLASTICIZER COMPOSITION AND VINYLCHLORIDE RESIN COMPOSITION COMPRISING SAME**

(30) Priority: 12.11.2021 KR 20210155535
(71) Applicant: Hanwha Solutions Corporation, Jung-gu Seoul 04541 (KR)
(72) Inventor: RYOO, Sungmin, Daejeon 34128 (KR); YOO, Myung-Ik, Daejeon 34128 (KR); KIM, Jaesong, Daejeon 34128 (KR)
(74) Representative: Berggren Oy
(86) International application number: PCT/KR2022/017663
(87) International publication number: WO 2023/085813

(57) **Abstract**

The present disclosure relates to a vinyl chloride resin composition with improved migration resistance, processability, and filler loading properties, which is a two-component plasticizer composition including di(2-ethylhexyl)cyclohexane-1,4-dicarboxylate (DEHCH) and diisononylcyclohexane-1,2-dicarboxylate (DINCH) in combination.

## Description

### [TECHNICAL FIELD]

### CROSS-REFERENCE TO RELATED APPLICATION(S)

This application claims the benefits of Korean Patent Application No. 10-2021-0155535 filed on November 12, 2021 with the Korean Intellectual Property Office, the disclosure of which is incorporated herein by reference in its entirety.

The present disclosure relates to a plasticizer composition and a vinyl chloride resin composition including the same. Specifically, the present disclosure relates to a vinyl chloride resin composition with improved migration resistance and processability by including a two-component plasticizer composition.

### [BACKGROUND OF ART]

A vinyl chloride resin includes a homopolymer of vinyl chloride and a copolymer containing 50% or more of vinyl chloride, and is one of five general-purpose thermoplastic resins prepared by suspension polymerization and emulsion polymerization. A polyvinyl chloride resin prepared by emulsion polymerization is mixed with a plasticizer, a stabilizer, a filler, a blowing agent, a pigment, a viscosity depressant, a dispersing agent, titanium dioxide (TiO₂), and a sub-material having a specific function to be used in a plastisol form in various fields such as a floor material, wall paper, tarpaulin, artificial leathers, toys, automobile undercoating materials, carpets, and mats, through a coating forming method or mold forming method.

In the vinyl chloride resin compositions, the plasticizers are liquid components that occupy the largest content, and examples thereof include phthalate-based products such as di-2-ethylhexyl phthalate (DEHP), di-isononyl phthalate (DINP), di-N-octyl phthalate (DNOP), di-iso-decyl phthalate (DIDP), butyl benzyl phthalate (BBP), and din-butyl phthalate (DBP). In particular, DINP has been widely used.

However, the phthalate-based plasticizers, which are endocrine disrupters that interfere or disrupt the human hormonal actions, are socially considered suspicious as environmental hormones. Thus, there is a movement to regulate the phthalate plasticizers. Accordingly, it has been recently reported an example of using a non-phthalate-based plasticizer instead of the phthalate-based plasticizer.

DOTP, which is a non-phthalate-based plasticizer, is used alone or in combination with di-isononyl phthalate (DINP). Since DOTP is not a phthalate-based plasticizer, it can stay away from the controversy over environmental hormones, but has poor migration resistance among physical properties, so there may be problems such as chemical exposure to consumers, and decreased product durability and flexibility due to loss of plasticizers. The migration of the plasticizer refers to a phenomenon in which the plasticizer is once present in the vinyl chloride resin and gradually flows out of the vinyl chloride resin over time, and this is an important factor limiting the use thereof in carpets, mats, etc., which may have a direct impact on the human body. Carpet or mat products largely have two structures, an upper layer and a lower layer. The upper layer is made of synthetic polyester fabric or fabric made of vegetable raw materials such as coir (coconut fabric), and the lower layer is made of vinyl chloride resin. When carpet products are used indoors, the plasticizer can transfer to the floor or indoor floor finishing material, causing contamination that is very difficult to remove. In addition, DOTP has a slower gelling rate than existing phthalate plasticizers, so it requires a high processing temperature, which may cause heat damage to the polyester fabric that forms a structure with the vinyl chloride resin composition in carpet and mat products. Since fabrics made of polyester or vegetable raw materials are very sensitive to heat, the rapid gelling rate of the vinyl chloride composition is the most essential property considered in carpet or mat products to avoid the heat damage.

Another example of a non-phthalate plasticizer is DINCH. DINCH, like DOTP, has poor migration resistance and a slower gelling rate than DOTP, so it has the problem of very poor processability.

The filler is an essential additive used in carpet and mat products, and is used to achieve plastisol viscosity suitable for product coating or to provide product fullness. A high filler loading amount used to achieve the same plastisol viscosity (better filler loading performance) is advantages for lowering the unit price and reducing the amount of plasticizer migrated out of the product. Additionally, the filler loading amount increases and the weight of carpet and mat products increases, which can help improve non-slip characteristics of the product.

Accordingly, there is a need to develop a non-phthalate plasticizer with improved migration resistance, processability (gelling rate), and filler loading properties.

### [DETAILED DESCRIPTION OF THE INVENTION]

### [Technical Problem]

The present disclosure relates to a vinyl chloride resin composition including a plasticizer composition with improved migration resistance, processability, and filler loading properties.

### [Technical Solution]

In the present disclosure, there is provided a vinyl chloride resin composition including 100 parts by weight of a vinyl chloride resin, and 50 to 300 parts by weight of a plasticizer composition based on 100 parts by weight of the vinyl chloride resin, wherein the plasticizer composition comprises di(2-ethylhexyl)cyclohexane-1,4-dicarboxylate (DEHCH) and diisononylcyclohexane-1,2-dicarboxylate (DINCH).

In addition, the plasticizer composition may include di(2-ethylhexyl)cyclohexane-1,4-dicarboxylate (DEHCH) and diisononylcyclohexane-1,2-dicarboxylate (DINCH) at a weight ratio of 10:90 to 25:75.

### [ADVANTAGEOUS EFFECTS]

The vinyl chloride resin composition according to the present disclosure is a two-component plasticizer composition including di(2-ethylhexyl)cyclohexane-1,4-dicarboxylate (DEHCH) and diisononylcyclohexane-1,2-dicarboxylate (DINCH) in combination, thereby improving migration resistance, processability, and filler loading properties.

Additionally, the present disclosure can provide an eco-friendly vinyl chloride resin composition with improved physical properties without containing a phthalate-based plasticizer.

### [BRIEF DESCRIPTION OF THE DRAWINGS]

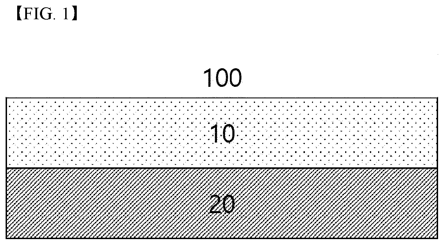

FIG. 1 shows a structural schematic diagram of a carpet or mat product (100) containing the vinyl chloride resin composition according to an embodiment of the present disclosure, where the upper layer (10) is a fabric made of polyester or vegetable raw materials, and the lower layer (20) is a sheet made of a vinyl chloride resin composition.

### [DETAILED DESCRIPTION OF THE EMBODIMENTS]

The terms "the first", "the second", and the like are used to describe a variety of components, and these terms are merely employed to distinguish a certain component from other components.

The terminology used herein is for the purpose of describing particular embodiments only and is not intended to limit the invention. The singular forms are intended to include the plural forms as well, unless the context clearly indicates otherwise. It will be further understood that the terms "include", "have", or "possess" when used in this specification, specify the presence of stated features, numbers, steps, components, or combinations thereof, but do not preclude the presence or addition of one or more other features, numbers, steps, components, or combinations thereof.

Also, as used herein, when a layer or an element is mentioned to be formed "on" layers or elements, the layer or element may be directly formed on the layers or elements, or other layers or elements may be additionally formed between the layers, on a subject, or on a substrate.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the vinyl chloride resin composition according to embodiments of the present invention will be described in detail.

The vinyl chloride resin composition of the present disclosure includes 100 parts by weight of a vinyl chloride resin, and 50 to 200 parts by weight of a plasticizer composition based on 100 parts by weight of the vinyl chloride resin, wherein the plasticizer composition may include di(2-ethylhexyl)cyclohexane-1,4-dicarboxylate (DEHCH) and diisononylcyclohexane-1,2-dicarboxylate (DINCH). Specifically, the plasticizer composition may consist only of di(2-ethylhexyl)cyclohexane-1,4-dicarboxylate (DEHCH) and diisononylcyclohexane-1,2-dicarboxylate (DINCH).

The vinyl chloride resin can be prepared by polymerizing a vinyl chloride monomer alone, or a vinyl chloride monomer and a comonomer copolymerizable therewith. At this time, the polymerization method is not particularly limited, and may be performed according to conventional polymerization methods known in the art to which the present invention pertains such as micro suspension polymerization, emulsion polymerization, or seed emulsion polymerization. When produced by emulsion polymerization or micro suspension polymerization, the average particle size of the prepared vinyl chloride resin is small and uniform compared to when produced by other polymerization methods. Specifically, the vinyl chloride resin may be a vinyl chloride resin alone, a vinyl chloride acetate copolymer resin, or a mixture thereof.

DEHCH and DINCH have low viscosity at room temperature and low temperatures compared to phthalate- and terephthalate-based plasticizers to realize high filler mixing amount (loading amount). Among these, DEHCH has a faster gelling rate than the representative non-phthalate plasticizers, DOTP and DINCH. In particular, DEHCH can replace existing plasticizers because it can minimize the generation of volatile organic compounds compared to the existing phthalate plasticizers. Even when DEHCH is used alone as a plasticizer for the vinyl chloride resin, it is possible to achieve good physical properties of the vinyl chloride resin. However, when the filler mixing amount of DEHCH is higher than a predetermined level, the plastisol viscosity is higher than that of DINCH, and thus the filler loading properties are inferior.

On the other hand, DINCH has superior filler loading properties compared to DEHCH, but has problems of poor migration resistance and processability. Accordingly, the present inventors used a mixture of DEHCH and DINCH, and attempted to find the optimal mixing ratio that can compensate for each other's shortcomings and add them to the vinyl chloride resin.

The migration of the plasticizer refers to a phenomenon in which a part of the plasticizer mixed with a polymer resin flows out of the polymer resin, and when leaked plasticizers enter the body, it may inhibit the normal activity of the endocrine system directly involved in the life activity or may trigger an abnormal reaction to cause lethal harm, and thus the migration of the plasticizers should be inhibited as much as possible. In addition, this is an important factor limiting the use thereof in carpet or mat products, which may have a direct impact on the human body. Carpet or mat products largely have two structures, an upper layer and a lower layer. The upper layer is made of synthetic polyester fabric or fabric made of vegetable raw materials such as coir (coconut fabric), and the lower layer is made of vinyl chloride resin. When carpet or mat products are used indoors, the plasticizer can transfer to the floor or indoor floor finishing material, causing contamination that is very difficult to remove.

In addition, DOTP has a slower gelling rate than existing phthalate plasticizers, so it requires a high processing temperature, which may cause heat damage to the polyester fabric that forms a structure with the vinyl chloride resin composition in carpet and mat products. Since fabrics made of polyester or vegetable raw materials are very sensitive to heat, the rapid gelling rate of the vinyl chloride composition is the most essential property considered in carpet or mat products to avoid the heat damage.

The filler is an essential additive used in carpet and mat products, and is used to achieve plastisol viscosity suitable for product coating or to provide product fullness. A high filler loading amount used to achieve the same plastisol viscosity (better filler loading performance) is advantages for lowering the unit price and reducing the amount of plasticizer migrated out of the product. Additionally, as the filler loading amount increases, the weight of the product increases, which can partially improve non-slip characteristics of the carpet and mat products.

The plasticizer composition may be included in an amount of 50 to 300 parts by weight based on 100 parts by weight of the vinyl chloride resin. Specifically, the plasticizer composition may be included in an amount of 60 to 120 parts by weight, 60 to 100 parts by weight, or 60 to 90 parts by weight. When the content of the plasticizer composition is below the lower limit of the above range, the viscosity of the vinyl chloride resin composition or plastisol may increase, which may slowdown the processing speed, coating properties may be reduced such as a lack of smooth coating surface, or flexibility of the product may be deteriorated. When the plasticizer content exceeds the upper limit of the above range, the coating thickness may become thin due to low viscosity, and plasticizer migration may occur excessively, which is likely to cause a bleeding effect in which the plasticizer leaks onto the surface of the final molded product, thereby causing surface stickiness, which can cause problems in processing and finished products.

The plasticizer composition may include di(2-ethylhexyl)cyclohexane-1,4-dicarboxylate (DEHCH) and diisononylcyclohexane-1,2-dicarboxylate (DINCH) at a weight ratio of 10:90 to 25:75. When the content of DINCH is greater than the above mixing ratio of the plasticizer composition, the gelling rate may slow down, resulting in poor processability and poor migration resistance. On the other hand, when the content of DEHCH is more than the above mixing ratio of the plasticizer composition, the viscosity of the vinyl chloride resin composition may increase, resulting in poor coating properties such as slow coating speed or lack of smooth coating surface, and poor filler loading properties.

The vinyl chloride resin composition may further include a stabilizer and a filler. In this case, the stabilizer may be further included in an amount of 1 to 5 parts by weight based on 100 parts by weight of the vinyl chloride resin, and the filler may be included in an amount of 100 to 600 parts by weight based on 100 parts by weight of the vinyl chloride resin. Specifically, the stabilizer may be further included in an amount of 2 to 4 parts by weight, and the filler may be further included in an amount of 200 to 500 parts by weight or 200 to 400 parts by weight.

When the stabilizer is included in an amount less than the lower limit of the content range, a problem of poor thermal stability may occur, and phenomena such as a decrease in strength or brittleness of the product due to thermal decomposition may occur. When the stabilizer is included in an amount exceeding the upper limit, the stabilizer may migrate out of the product.

When the filler is included in an amount less than the lower limit of the content range, there is a problem of lowering dimensional stability and economic feasibility. When it is included in an amount exceeding the upper limit, there may be problems such as unsatisfactory product surface or deterioration in processability.

The stabilizer is added for the purpose of preventing various changes in physical properties that occur when HCl is separated from the vinyl chloride resin and forms a polyene structure, which is a chromophore, causing cleavage and cross-linking of the main chain. The stabilizers include at least one selected from the group consisting of Na-Zn compounds, Ca-Zn-based compounds, K-Zn-based compounds, Ba-Zn-based compounds, organic Tin-based compounds, metallic soap-based compounds, phenolbased compounds, phosphoric acid ester-based compounds, and phosphorous acid ester-based compounds. More specific examples of stabilizers that can be used in the present disclosure include Ca-Zn-based compounds; K-Zn-based compounds; Ba-Zn-based compounds; organic Tin-based compounds such as mercaptide-based compounds, maleic acid-based compounds, or carboxylic acid-based compounds; metallic soap-based compounds such as Mg-stearate, Ca-stearate, Pb-stearate, Cd-stearate, or Ba-stearate; phenolic compounds; phosphoric acid ester-based compounds; or phosphorous acid ester-based compounds. They are optionally included depending on the purpose of use. In the present disclosure, considering the use of carpets and mats, it is particularly preferable to use Ca-Zn-based or Ba-Zn-based compounds.

The filler of the present disclosure is used for the purpose of improving the productivity and dry touch feeling of the vinyl chloride resin composition, and includes at least one selected from the group consisting of calcium carbonate, talc, titanium dioxide, kaolin, silica, alumina, barium sulfate, magnesium hydroxide, and clay. Preferably, it may be calcium carbonate. As the filler content increases, the viscosity of the vinyl chloride resin composition generally increases, and the migration resistance tends to improve.

The filler may be calcium carbonate having an average particle diameter D50 of 1 to 50 µm.

The average particle diameter Dn means a particle diameter at the n% point of the cumulative distribution of the number of particles according to particle diameters. In other words, D50 is a particle diameter at the 50% point of the cumulative distribution of the number of particles according to particle diameters, D90 is a particle diameter at the 90% point of the cumulative distribution of the number of particles according to particle diameters, and D10 is a particle diameter at the 10% point of the cumulative distribution of the number of particles according to particle diameters.

The Dn may be measured using a laser diffraction method. Specifically, the powder to be measured is dispersed in the dispersion medium and introduced into a commercially available particle size measuring device (e.g., Microtrac S3500, Mastersizer 3000). Then, a particle size distribution is obtained by measuring a difference in diffraction patterns according to particle diameters when the particles pass through the laser beam. In the measuring device, D10, D50 and D90 can be obtained by calculating a particle diameter at a point of reaching 10%, 50% and 90% of the cumulative distribution of the number of particles according to particle diameters.

The vinyl chloride resin included in the vinyl chloride resin composition of the present disclosure may have a weight average degree of polymerization of 700 to 1700. Additionally, the weight average molecular weight (Mw) of the vinyl chloride resin may be 25,000 to 300,000. When the degree of polymerization and the molecular weight are within the above range, dispersibility is excellent, compatibility with plasticizers is good, and processability of the plastisol can be improved.

When the degree of polymerization or molecular weight is below the lower limit of the above range, durability may be reduced when used as a product due to insufficient physical properties. When the degree of polymerization or molecular weight is above the upper limit of the above range, processability is very poor and it is necessary to increase the processing temperature, which may result in heat damage to the fibers in the carpet or mat products.

Additionally, this vinyl chloride resin can be mixed or 100% replaced with a vinyl chloride acetate copolymer resin with an equivalent degree of polymerization. The vinyl chloride acetate copolymer resin has a faster gelling rate than the vinyl chloride resin and has excellent processability, so it is especially preferred for carpet or mat products.

The vinyl chloride resin composition of one embodiment of the present disclosure may have an initial viscosity of 5,000 cps to 110,000 cps. Specifically, the vinyl chloride resin composition of one embodiment of the present disclosure may have an initial viscosity of 10,000 cps to 75,000 cps, 20,000 cps to 75,000 cps, or 40,000 cps to 50,000 cps. That is, the vinyl chloride resin composition of one embodiment of the present disclosure may be in the form of a viscous paste. The viscosity of the vinyl chloride resin composition can be controlled depending on the contents of plasticizer and filler included. If the viscosity of the vinyl chloride resin composition is too high, processability is inferior, and if the viscosity is too low, the coating thickness becomes thin and processability for applications such as carpets and mats becomes inferior. Therefore, it is necessary to control the viscosity of the vinyl chloride resin composition by appropriately controlling the contents of plasticizer and filler.

The initial viscosity of the vinyl chloride resin composition of the present disclosure is measured using a Brookfield viscometer (spindle #4 to #7, 20 RPM) after aging for 1 hour in a constant temperature oven at 25 °C.

The vinyl chloride resin composition according to the present disclosure can be prepared by a method generally known in the art using a vinyl chloride resin, a plasticizer, and optionally additives, and the method is not particularly limited.

Hereinafter, preferred embodiments are presented to facilitate the understanding of the invention. However, the following examples are for illustrative purposes only and are not intended to limit the present disclosure.

### Experimental Example 1

A plasticizer was included with the composition shown in Tables 1 and 2 below, and a vinyl chloride resin with a weight average degree of polymerization of 1,000 and a weight average molecular weight of about 80,000 to 100,000 was used. Calcium carbonate with a D50 of 20 to 30 µm was used as a filler, and a Ba-Zn-based mixed stabilizer was used as a heat stabilizer. Plastisol containing 3 parts by weight of the heat stabilizer, 300 parts by weight of the filler, and the plasticizer based on 100 parts by weight of the vinyl chloride resin was prepared. The content of the plasticizer was as shown in Tables 1 and 2 below. The viscosity, gelling rate, and migration resistance of the plastisol according to the composition in Tables 1 and 2 were evaluated. Each evaluation method is as follows.

### (1) Viscosity

The initial viscosity of the vinyl chloride resin composition (plastisol) prepared according to Tables 1 and 2 was measured using a Brookfield viscometer (spindle #6 or #7, 20 RPM) after aging for 1 hour in a constant temperature oven at 25 °C.

### (2) Plasticizer migration resistance

The vinyl chloride resin composition (plastisol) prepared according to Tables 1 and 2 was coated using a spread coater, and then heated using a Matisse oven to gel the plastisol, thereby preparing a sheet. The prepared sheet was cut into a rectangular specimen measuring 5 cm in width and 3 cm in length. An oil-absorbing paper made of polypropylene was placed on the upper/lower part of the specimen and left at 60 °C under a load of 5 kg for 7 days to promote plasticizer migration. After the plasticizer migration experiment was completed, the weight change rates of the specimen and the oil paper were measured.

The weight change rate of the specimen was calculated as [(weight change of specimen/weight of specimen before test) × 100], and the weight change rate of oil paper was calculated as [(weight change of oil paper/weight of oil paper before test) × 100]. The weight loss of the specimen is the same as the weight gain of the oil paper, so in this experiment, plasticizer migration resistance was evaluated only with the weight change rate of the specimen.

### (3) Gelling rate

The gelling rate of the vinyl chloride resin composition (plastisol) prepared according to Tables 1 and 2 was measured at 110 °C using scanning vibrating needle curemeter (SYNC). The amplitude decreased as the gelation proceeded in the SYNC equipment. The gelling rate was measured by comparing the amplitude reduction rate, and scored (very good 5>4>3>2>1 very poor).

**[Table 1]**

| | Example 1 | Example 2 | Example 3 | Example 4 |
|---|---|---|---|---|
| Plasticizer (mixing weight ratio) | DEHCH : DINCH | DEHCH : DINCH | DEHCH : DINCH | DEHCH : DINCH |
| | 10 : 90 | 20 : 80 | 25 : 75 | 25 : 75 |
| Total Plasticizer content (phr*) | 65 | 65 | 65 | 75 |
| Viscosity (cps) | 48,500 | 46,800 | 48,000 | 12,300 |
| Gelling rate | 3 | 3.2 | 3.5 | 3 |
| Migration resistance | 2.3 | 1.9 | 1.5 | 3.3 |

**[Table 2]**

| | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|
| Plasticizer (mixing weight ratio) | DOTP 100 | DOTP 100 | DINCH 100 | DEHCH 100 | DEHCH 100 | DEHCH : DINCH | DEHCH: DINCH |
| | | | | | | 30 : 70 | 14 : 86 |
| Total Plasticizer content (phr*) | 65 | 75 | 65 | 65 | 75 | 65 | 21 |
| Viscosity (cps) | Cannot be mixed due to high viscosity | 32050 | 47,000 | 74,800 | 26200 | 75,000 | Cannot be mixed due to high viscosity |
| Gelling rate | - | 2 | 1 | 4.5 | 1 | 4.0 | - |
| Migration resistance | - | 5.2 | 2.5 | 0.9 | 2.6 | 1.3 | - |

In Tables 1 and 2, the plasticizer DEHCH : DINCH (10 : 90) means that DEHCH and DINCH are mixed at a weight of 10:90, and DOTP (100) means that only DOTP is used as the plasticizer.

In addition, phr of the total plasticizer content in Tables 1 and 2 indicates the content of the plasticizer in parts by weight relative to 100 parts by weight of the vinyl chloride resin, and 65 phr of the plasticizer content means that 65 parts by weight of the plasticizer is included in 100 parts by weight of the vinyl chloride resin.

In Comparative Examples 1 and 7, when the plasticizer was added, the viscosity was so high that mixing was impossible and the form of plastisol was not maintained, so the viscosity could not be measured.

As a result of Experimental Example 1, even with the same amount of plasticizer added, if the plasticizer mixing ratio was not satisfied, the viscosity became very high and processability became inferior. In addition, it was confirmed that when DINCH was used alone, the gelling rate was inferior, and when DEHCH was used alone, the viscosity increased depending on the plasticizer content, resulting in poor processability or low gelling rate. Further, it was confirmed that the filler loading properties and migration resistance of the conventionally used plasticizer DOTP were very poor.

### Experimental Example 2

A plastisol was prepared with the composition shown in Table 3 below to confirm filler loading properties. The content of plasticizer and the amount of filler added were as shown in Table 3, and the plasticizer in which DEHCH and DINCH were mixed at a weight ratio of 25:75 was used. Other conditions were the same as in Experimental Example 1 to prepare the plastisol. The viscosity and filler loading properties of the plastisol according to the composition in Table 3 were evaluated and are shown in Table 3. The viscosity evaluation method is the same as Experimental Example 1, and the filler loading property evaluation method is as follows.

### (1) Filler loading properties

The filler loading properties can be evaluated by comparing the content of plasticizer, the amount of filler added, and the viscosity. When the plasticizer and filler were added in equal amounts, the filler loading properties of the plasticizer used in plastisol with low viscosity are better.

**[Table 3]**

| | Ex. 5 | Ex. 6 | Ex. 7 | Comp. Ex. 8 | Comp. Ex. 9 | Comp. Ex. 10 | Comp. Ex. 11 | Comp. Ex. 12 |
|---|---|---|---|---|---|---|---|---|
| Plasticizer compos ition (mixing weight ratio) | DEHCH : | DEHCH : | DEHCH : | DEHCH : | DEHCH | DEHCH | DEHCH | DEHCH |
| | DINCH | DINCH | DINCH | DINCH | 100 | 100 | 100 | 100 |
| | 25 : 75 | 25 : 75 | 25 : 75 | 25 : 75 | | | | |
| Total Plastici zer content (phr*) | 65 | 65 | 65 | 65 | 65 | 65 | 65 | 65 |
| Filler content (phr*) | 200 | 300 | 400 | 500 | 200 | 300 | 400 | 500 |
| Initial viscosit y (cps) | 21,050 | 48,000 | 105,600 | Cannot be mixed due to high viscosity | 45,700 | 74,800 | 179,500 | Cannot be mixed due to high viscosity |
| Filler loading properti es | excellent | excellent | excellent | - | poor | poor | poor | - |

In Table 3, the plasticizer DEHCH : DINCH (25 : 75) means that DEHCH and DINCH are mixed at a weight of 25:75, and DEHCH (100) means that only DEHCH is used as the plasticizer. In addition, the unit phr of the total plasticizer content and the filler content in Table 3 indicates the content of the plasticizer in parts by weight relative to 100 parts by weight of the vinyl chloride resin, and 65 phr of the plasticizer content means that 65 parts by weight of the plasticizer is included in 100 parts by weight of the vinyl chloride resin. Further, 200 phr of the filler content means that 100 parts by weight of the filler is included in 100 parts by weight of the vinyl chloride resin.

In Comparative Examples 8 and 12, when the plasticizer and the filler were added, the viscosity was so high that mixing was impossible and the viscosity as a plastisol could not be measured.

As a result of Experimental Example 2, increasing the mixing amount of filler, even if the plasticizer mixing ratio and the plasticizer content satisfied the range of the present disclosure, led to excessively high viscosity, making mixing impossible, or deteriorating processability.

In addition, it was confirmed that when DOTP was used alone as a plasticizer, filler loading properties were inferior regardless of the plasticizer content and the mixing amount of filler. When DEHCH was used alone as a plasticizer, it was confirmed that as the mixing amount of filler increased relative to the plasticizer content, filler loading properties decreased.

### Experimental Example 3

A plastisol was prepared with the composition shown in Table 4 below to confirm filler loading properties according to the mixing amount of plasticizer. The content of plasticizer and the amount of filler added were as shown in Table 4, and the plasticizer in which DEHCH and DINCH were mixed at a weight ratio of 25:75 was used. Other conditions were the same as in Experimental Example 1 to prepare the plastisol. The viscosity and filler loading properties of the plastisol according to the composition in Table 4 were evaluated and are shown in Table 4. The viscosity evaluation method is the same as Experimental Example 1, and the filler loading property evaluation method is the same as Experimental Example 2.

**[Table 4]**

| | Comp. Ex. 13 | Comp. Ex. 14 | Comp. Ex. 15 | Ex.8 | Ex.9 | Comp. Ex. 16 | Comp. Ex. 17 | Comp. Ex. 18 |
|---|---|---|---|---|---|---|---|---|
| Polyvinyl chloride resin content (parts by weight) | 100 | | | | | | | |
| Plasticize r content (phr *) | 30 | 40 | 50 | 75 | 90 | 100 | 200 | 300 |
| Stabilizer content (phr *) | 3 | 3 | 3 | 3 | 3 | 3 | 3 | 3 |
| Amount of filler added (phr *) | 300 | 300 | 300 | 300 | 300 | 300 | 300 | 300 |
| Viscosity (cps) | Cannot be mixed due to high viscosity | Cannot be mixed due to high viscosity | 188,000 | 26,200 | 10,450 | 5,520 | 2,130 | 980 |

The unit phr of the total plasticizer content, the stabilizer content and the filler content in Table 4 indicates the content of the plasticizer, stabilizer, and filler in parts by weight relative to 100 parts by weight of the vinyl chloride resin. As a result of Experimental Example 3, it was confirmed that even if the filler content satisfied the range of the present disclosure, the viscosity of the plastisol varied depending on the plasticizer content. As the plasticizer content in the resin composition increases, the viscosity of the plastisol decreases. If the viscosity is too high, processability is inferior. However, for use as carpets, mats, etc., as in the present disclosure, if the viscosity is too low, uniformity of the coating is deteriorated, and coating to a thickness above a certain level becomes difficult. Additionally, as the amount of filler added increases, the viscosity of the plastisol increases. Accordingly, it is necessary to obtain a plastisol viscosity with excellent processability by controlling the type of plasticizer mixed, the mixing ratio, and the amounts of plasticizer and filler added.

As shown in Table 4 above, when the filler content was 300 phr or more and no liquid additives other than the plasticizer were added, it was confirmed that the plasticizer content was 60 phr or more.

### [DESCRIPTION OF SYMBOLS]

- 100: Product
- 10: Upper layer
- 20: Lower layer

## Claims

1. A vinyl chloride resin composition comprising
100 parts by weight of a vinyl chloride resin, and
50 to 300 parts by weight of a plasticizer composition based on 100 parts by weight of the vinyl chloride resin,
wherein the plasticizer composition comprises di(2-ethylhexyl)cyclohexane-1,4-dicarboxylate (DEHCH) and diisononylcyclohexane-1,2-dicarboxylate (DINCH).

2. The vinyl chloride resin composition of Claim 1,
wherein the plasticizer composition comprises di(2-ethylhexyl)cyclohexane-1,4-dicarboxylate (DEHCH) and diisononylcyclohexane-1,2-dicarboxylate (DINCH) at a weight ratio of 10:90 to 25:75.

3. The vinyl chloride resin composition of Claim 1,
further comprising 1 to 5 parts by weight of a stabilizer and 100 to 600 parts by weight of a filler based on 100 parts by weight of the vinyl chloride resin.

4. The vinyl chloride resin composition of Claim 3,
wherein the stabilizer is at least one selected from the group consisting of a Na-Zn-based compound, a Ca-Zn-based compound, a K-Zn-based compound, a Ba-Zn-based compound, an organic Tin-based compound, a metallic soap-based compound, a phenolbased compound, a phosphoric acid ester-based compound, or a phosphorous acid ester-based compound.

5. The vinyl chloride resin composition of Claim 3,
wherein the filler is at least one selected from the group consisting of calcium carbonate, talc, titanium dioxide, kaolin, silica, alumina, magnesium hydroxide, barium sulfate, or clay.

6. The vinyl chloride resin composition of Claim 5,
wherein the filler is calcium carbonate with an average particle diameter (D50) of 1 to 50 µm.

7. The vinyl chloride resin composition of Claim 1,
wherein the vinyl chloride resin has a weight average degree of polymerization of 700 to 1700.

8. The vinyl chloride resin composition of Claim 1,
wherein the vinyl chloride resin is a vinyl chloride resin alone, a vinyl chloride acetate copolymer resin alone, or a mixture thereof.

9. The vinyl chloride resin composition of Claim 1,
wherein the vinyl chloride resin has an initial viscosity of 5,000 cps to 110,000 cps.
